# EUROPÄISCHE PATENTANMELDUNG

(11) **EP 2 144 359 A2**
(43) Veröffentlichungstag der Anmeldung: **13.01.2010**
(21) Anmeldenummer: 08022308.4
(22) Anmeldetag: 23.12.2008
(51) Int. Cl.: H02M 3/335

(54) **DC/DC- Wandler**

(30) Priorität: 09.07.2008 EP 08012366
(71) Anmelder: SMA Solar Technology AG, 34266 Niestetal (DE)
(72) Erfinder: Mallwitz, Dr. Regine, 34131 Kassel (DE); Zacharias, Prof. Dr. Peter, 34131 Kassel (DE)
(74) Vertreter: Walther, Walther & Hinz GbR

(57) **Zusammenfassung**

Bei einem resonant betriebenen DC/DC-Wandler (2) zum Umwandeln einer Eingangs-Gleichspannung (UDCin) in eine Ausgangs-Gleichspannung (UDC2) mit einer eingangsseitigen, Schaltelemente (T1, T2) umfassenden Brückenschaltung mit mindestens zwei AC-Ausgängen, mit einem eine Resonanzinduktivität (L1) und eine Resonanzkapazität (C3) umfassenden Resonanzkreis sowie einen Hochfrequenztransformator (TR) zur galvanischen Trennung, wobei der Transformator (TR) mindestens eine Primärwicklung (N1) und mindestens eine Sekundärwicklung (N2) jeweils mit mindestens zwei Wicklungsanschlüssen umfasst sowie die AC-Ausgänge der Brückenschaltung an die Primärwicklung (N1) und eine Gleichrichterbrücke mit Dioden (D5-D8) an der Sekundärwicklung (N2) angeschlossen sind, soll der Wirkungsgrad verbessert werden. Dies wird dadurch erreicht, dass eine spannungshochsetzende Schaltungsanordnung dem Resonanzkreis derart nachgeschaltet ist, dass mindestens ein zusätzlich steuerbares Schaltelement (T3, T4) enthält, dass mit mindestens einer zusätzlichen Dioden (D3, D4, D9, D10) oder mit mindestens einer Diode (D3,D4,D5,D6) des sekundärseitigen Gleichrichters parallel oder in Reihe verschaltet ist, wobei diese Anordnung parallel zum HF-Trafo angeschlossen ist, so dass das zusätzliche Schaltelement (T3, T4) den Resonanzkreis in einem angesteuerten Zustand kurzschließt, so dass in der Resonanzinduktivität (L1) Energie gespeichert wird, die im nicht angesteuerten Zustand wieder abgegeben wird.

## Beschreibung

Die Erfindung betrifft einen resonant betriebener DC/DC-Wandler nach dem Oberbegriff des Anspruches 1.

Ein DC/DC-Wandler der gattungsgemäßen Art ist aus der DE 102005023291 A1 bekannt. Dieser umfasst eingangsseitig einen Hochsetzsteller sowie einen Resonanzwandler, so dass praktisch zwei DC/DC-Wandler bzw. Energiewandlerstufen vorhanden sind. Dieser DC/DC-Wandier hat den Vorteil, dass die Belastung der Schalter im Resonanzwandler reduziert wird. Die Schalter schalten durch die eingebaute Resonanz bei lückendem Strom nahezu verlustfrei ein und aus. Vorteilhaft ist auch seine galvanische Trennung. Durch Taktung in DC/AC-Wandlern können bei Photovoltaik-Generatoren hohe kapazitive Ableitströme entstehen. Durch eine galvanische Trennung ist eine Erdung des Generators und damit eine Beseitigung dieser unerwünschten Ströme möglich. Durch den eingangsseitigen Hochsetzsteller können schwankende Eingangsspannungen, insbesondere niedrigere Eingangsspannungen, angehoben werden. Die Gleichspannung eines PV-Generators ist häufig starken Schwankungen unterworfen z.B. je nach Wetterlage, Tages- oder Jahreszeit.
Von Nachteil ist aber, dass eine Hochsetzsteller-Diode auch leitend Verluste verursacht, wenn der Hochsetzsteller nicht arbeitet.

Der Erfindung liegt die Aufgabe zu Grunde, einen DC/DC-Wandler der genannten Art zu schaffen, der mit hohem Wirkungsgrad arbeitet.

Diese Aufgabe wird erfindungsgemäß dadurch gelöst, dass eine spannungshochsetzende Schaltungsanordnung derart dem Resonanzkreis nachgeschaltet ist, dass mindestens ein zusätzliches steuerbares Schaltelement in Kombination mit wenigstens einer Diode angeschlossen ist, so dass das zusätzliche Schaltelement den Resonanzkreis in einem angesteuerten Zustand kurzschließt, so dass in der Resonanzinduktivität Energie gespeichert wird, die im nicht angesteuerten Zustand wieder abgegeben wird, wobei die zusätzlichen Bauelemente wie Schalter und Dioden im nicht angesteuerten Zustand des wenigstens einen zusätzlichen Schaltelements nicht weiter an der Stromleitung beteiligt sind und somit keine Verluste verursachen.

Der Erfindung liegt der Gedanke zu Grunde, einen Resonanzwandler mit einem Hochfrequenz-Transformator, kurz HF-Trafo genannt, und eine zusätzliche hochsetzende Anordnung, die sich parallel zum HF-Trafo befindet, einzusetzen.

Die hochsetzende Anordnung arbeitet vorzugsweise nur bei geringer DC-Eingangsspannung. Übersteigt die DC-Eingangsspannung einen bestimmten Wert, ist die hochsetzende Funktion der zusätzlichen Anordnung nicht mehr erforderlich, so dass sie inaktiv ist. Zusätzliche Verluste werden im inaktiven Zustand nicht generiert, weil die Anordnung parallel zum HF-Trafo geschaltet ist. Ein Stromfluss durch die Bauteile der hochsetzenden Anordnung findet nur statt, wenn deren aktiven Bauelemente angesteuert werden. In diesem, aktiven Zustand werden auch Verluste generiert. Die Verluste treten jedoch nur beim Abschalten der aktiven Schalter der Anordnung auf. Das Einschalten erfolgt sanft (soft) und damit nahezu verlustfrei.

Prinzipiell können Resonanzbauelemente auch auf der Sekundärseite und/oder parallel angeordnet sein. Zweckmäßigerweise ist eine Drossel und ein Resonanzkondensator in Reihe mit einer Primärwicklung geschaltet. Grundsätzlich kann die hochsetzende Anordnung auch auf der Primärseite des HF-Trafos angeordnet sein. Voraussetzung für die Funktionsfähigkeit der erfindungsgemäßen hochsetzenden Anordnung ist jedoch immer, dass der Resonanzkreis, insbesondere die Resonanzinduktivität bzw. der Teil der Resonanzinduktivität, kurzgeschlossen wird. Die Anordnung wird also den Resonanzbauelementen insbesondere der Resonanzdrossel und de Resonanzkondensator, nachgeschaltet und liegt im Wechselspannungskreis des Wandlers. Resonanz kann auch ohne zusätzliche Resonanzdrossel oder Resonanzkondensator erfolgen, z.B. nur durch die Primärwicklung und/oder der Induktivität einer Leitung und/oder ohne zusätzlichen Kondensator, z.B. nur durch die parasitären Kapazitäten des HF-Trafos und/oder Halbbrücken-Kondensatoren.

Die hochsetzende Anordnung besteht aus mindestens einem zusätzlichen Schaltelement in Kombination mit Dioden. Die Dioden können als zusätzliche Bauelemente in die Schaltung integriert sein. Besonders vorteilhaft ist es jedoch, wenn vorhandene Dioden, vorzugsweise Dioden der sekundärseitigen Gleichrichterbrücke genutzt werden. Dadurch können Bauteile eingespart werden.

In einer vorteilhaften Weiterbildung des erfindungsgemäßen Wandlers ist vorgesehen, dass nur zwei zusätzliche Schaltelemente eingesetzt werden, die parallel zu zwei bereits vorhandenen Dioden der Gleichrichterbrücke geschaltet sind.

In einer besonders vorteilhaften Weiterbildung wird nur ein zusätzliches Schaltelement verwendet, das mit zwei zusätzlichen Dioden parallel zu zwei bereits vorhandenen Dioden der Gleichrichterbrücke geschaltet ist. Dadurch wird der Aufwand für die Ansteuerung der zusätzlichen Schaltelemente reduziert bei geringer Zahl an zusätzlichen Bauteilen.

Weitere vorteilhafte Ausgestaltungen der Erfindung sind in den Unteransprüchen angegeben.

Der DC/DC-Wandler ist für Photovoltaikwechselrichter besonders geeignet, weil er das Problem von kapazitiven Ableitströmen eines Photovoltaikgenerators löst, indem durch galvanische Trennung eine problemlose Erdung des Generators und durch die hochsetzende Anordnung ein optimaler und gleichbleibender Betriebspunkt möglich sind. Anhand der Zeichnungen wird die Erfindung nachstehend beispielhaft näher erläutert.
- Fig.1a-4a zeigen: verschiedene Ausführungsformen eines erfindungsgemäßen resonant betriebenen DC/DC-Wandlers,
- Fig.1b-4b zeigen: zu den Figuren 1a-4a zugehörige Strom- bzw. Spannungsdiagramme,

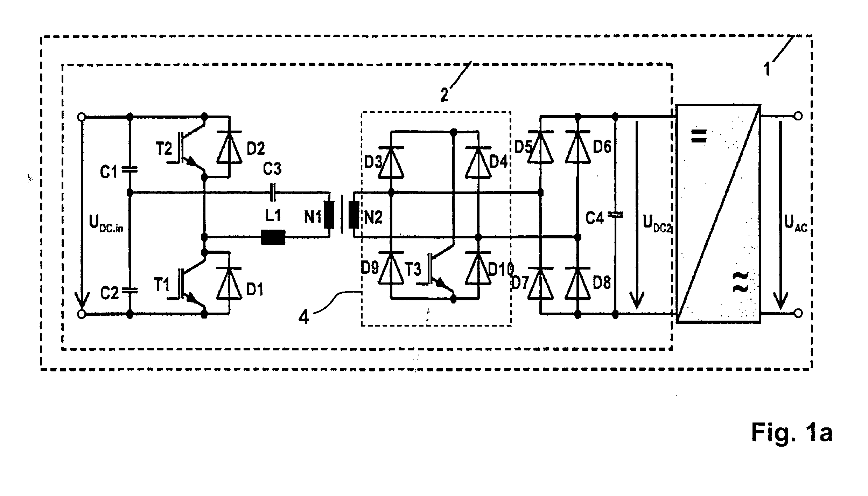

Fig. 1a zeigt einen Photovoltaikwechselrichter 1, der einen DC/DC-Wandler 2 und einen DC/AC-Wandler 3 mit einer netzkonformen Ausgangsspannung UAC umfasst. Fig.1a zeigt insbesondere den resonant betriebenen DC/DC-Wandler 2 zum Umwandeln einer Eingangs-Gleichspannung UDCin in eine Ausgangs-Gleichspannung UDC2 mit einer eingangsseitigen Brückenschaltung. Die Brücke ist hier als Halbbrücke dargestellt, bestehend aus den zwei Halbleiterschaltern, vorzugsweise Leistungshalbleiterschaltern T1, T2 sowie zwei Kondensatoren C1, C2. Sie kann auch als Vollbrücke ausgeführt sein. Weiterhin ist ein Resonanzkreis mit einem HF-Trafo TR zur galvanischen Trennung vorhanden. Die Resonanzfrequenz wird bestimmt durch eine Resonanzinduktivität, insbesondere durch eine Resonanzdrossel L1 aber auch durch die Streuinduktivität des HF-Trafos TR, und eine Resonanzkapazität, insbesondere einen Resonanzkondensator C3, aber auch durch die parasitären Kapazitäten des Trafos TR und hier durch die vorhandenen Kondensatoren C1, C2. Der HF-Trafo TR hat mindestes eine Primärwicklung N1 und mindestens eine Sekundärwicklung N2. Eine Gleichrichterbrücke mit Dioden D5 - D8 ist an der Sekundärwicklung angeschlossen. Dieser Gleichrichter wandelt die über den HF-Trafo TR übertragene Ausgangs-Wechselspannung der Brückenanordnung in eine Gleichspannung um.

Erfindungsgemäß ist eine spannungshochsetzende Schaltungsanordnung dem Resonanzkreis nachgeschaltet, bestehend aus einem Halbleiterschalter T3, der parallel zu den Dioden D3, D9 bzw. D4, D10 angeschlossen ist. Die spannungshochsetzende Anordnung 4 ist in Fig. 1a parallel zur Sekundärwicklung des HF-Trafos TR geschaltet. Die Diodenpaare D3, D9 bzw. D4, D10 sind in Reihe geschaltet. Der Mittelabgriff der einen Diodenreihenschaltung ist mit dem einen Ende der Sekundärwicklung des Trafos TR verbunden, der Mittelabgriff der anderen Diodenreihenschaltung ist mit dem anderen Ende der Sekundärwicklung des Trafos TR verbunden, so dass der Kurzschluss-Halbleiterschalter T3 bzw. je ein Diodenpaar D3, D10 und D4, D9 je nach Halbwelle in einem angesteuerten Zustand des Halbleiterschalters T3 im Resonanzkreis kurzschließend wirkt. Durch das Kurzschließen wird Energie in der Drossel bzw. in der Drossel und der Streuinduktivität des HF-Trafos gespeichert, die beim Öffnen des Halbleiterschalters T3 eine Spannungserhöhung bewirkt. Diese Schaltung arbeitet wie ein Hochsetzsteller.

Die die Resonanzfrequenz bestimmenden Bauteile sind so dimensioniert, dass die Dauer des Stromflusses während einer Halbwelle des hochfrequenten Stromes beeinflusst wird. Die Halbleiterschalter T1, T2 der Brücke werden abwechselnd so angesteuert, dass sie erst dann schließen, wenn der Stromfluss abgeklungen ist. Die zusätzlichen Bauteile, Resonanzinduktivität L1 bzw. die Resonanzkapazität C3, können sowohl primär als auch sekundär angeordnet sein. In Fig. 1a sind beide Bauteile auf der Primärseite, in Reihe zur Primärwicklung des HF-Trafos TR, angeordnet.

Jeweils zwei der vier Dioden D3, D4, D9 und D10 sind in Reihe geschaltet. Wie Fig. 1a zeigt, sind die Dioden D3 und D9 sowie D4 und D10 in Reihe geschaltet. Die Anode der Diode D3 ist dabei mit der Katode der Diode D9 verbunden und dieser Punkt ist wiederum mit dem einen Ende der Sekundärwicklung N2 des HF-Trafos TR verbunden. Die Anode der Diode D4 ist mit der Katode der Diode D10 verbunden und dieser Punkt ist wiederum mit dem anderen Ende der Sekundärwicklung N2 des HF-Trafos TR verbunden. Die Katoden der Dioden D3 und D4 sind miteinander verbunden, sowie die Anoden der Dioden D9 und D10. Parallel zu beiden Diodenpaaren D3 und D9 bzw. D4 und D10 ist der Halbleiterschalter T3 verschaltet.

Ist die hochsetzende Anordnung 4 aktiv, wird der Halbleiterschalter T3 mit der doppelten Frequenz des Halbleiterschalters T1 bzw. T2 angesteuert. Die Halbleiterschalter T2 und T3 werden gleichzeitig eingeschaltet. Die Halbleiterschalter T2 und T3 sind während der positiven Halbwelle des hochfrequenten Stroms durch die Induktivität L1 eingeschaltet. Die Halbleiterschalter T1 und T3 werden dann gleichzeitig eingeschaltet. Die Halbleiterschalter T1 und T3 sind während der negativen Halbwelle des hochfrequenten Stroms durch die Induktivität L1 eingeschaltet. Die Einschaltdauer des Halbleiterschalters T3 beträgt dabei nur ein Bruchteil der Einschaltdauer von dem Halbleiterschalter T2 oder T1, insbesondere 20% - 40%, beispielsweise 30%.

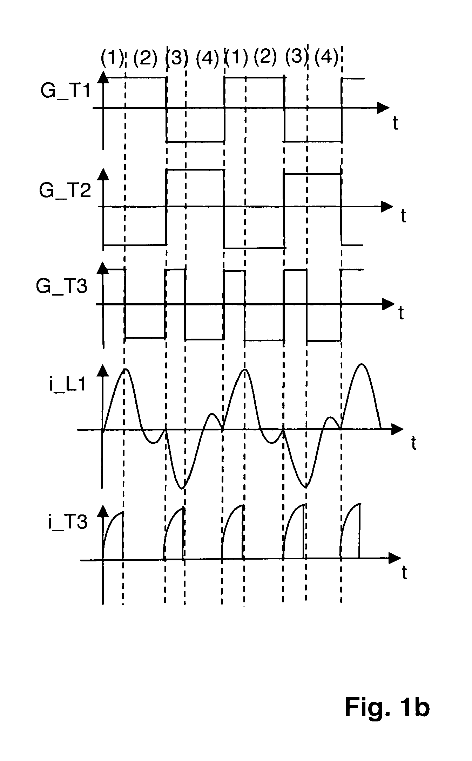

Fig. 1b zeigt die Ansteuersignale an den Gates der Halbleiterschalter T1, T2 und T3 sowie den Strom durch die Induktivität L1 bzw. den Strom durch den Halbleiterschalter T3 bei hochsetzendem Betrieb.
Es sind 4 Schaltzustände zu unterscheiden:
(1) T1 ein, T2 aus, T3 ein
(2) T1 ein, T2 aus, T3 aus
(3) T1 aus, T2 ein, T3 ein
(4) T1 aus, T2 ein, T3 aus

Im Schaltzustand (1) fließt primärseitig ein positiver Strom durch die Induktivität L. Da der Halbleiterschalter T3 geschlossen ist, fließt auf der Sekundärseite der Strom durch die Diode D3, T3 und D10. Durch die eingebaute Resonanz gestaltet sich der Strom durch die Induktivität L1 und auch durch den Halbleiterschalter T3 sinusförmig bis der Halbleiterschalter T3 ausgeschaltet wird. Es findet keine Energieübertragung auf den Kondensator C4 statt.

Im Schaltzustand (2) ist der Halbleiterschalter T3 geöffnet. Der primärseitige Strom durch die Induktivität L1 fließt sinusförmig weiter. Auf der Sekundärseite fließt der Strom durch die Gleichrichterdioden D5 und D8. Der Kondensator C4 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

Im Schaltzustand (3) ist der Halbleiterschalter T2 geschlossen und der Halbleiterschalter T1 geöffnet. Primärseitig fließt der Strom durch den Halbleiterschalter T2. Sekundärseitig ist der Halbleiterschalter T3 geschlossen, so dass auf der Sekundärseite ein Strom durch die Diode D4, den Halbleiterschalter T3 und die Diode D9 fließt. Der Strom durch die Induktivität L1 bzw. dem Halbleiterschalter T3 ist infolge der Resonanzbauelemente L1, C3 wieder sinusförmig. Das Vorzeichen des Stromes durch L1 ist entgegengesetzt zum Zustand (1) bzw. (2). Der Kondensator C4 wird in diesem Zustand nicht weiter aufgeladen.

Im Schaltzustand (4) wird der Halbleiterschalter T3 geöffnet. Der sekundärseitige Strom fließt nun durch den Gleichrichter, und zwar durch die Dioden D6 und D7. Der Kondensator C3 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

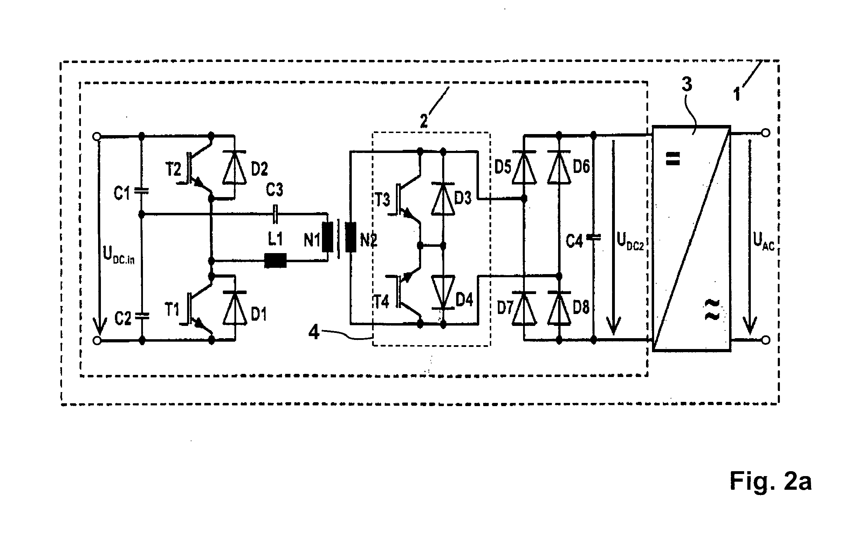

Erfindungsgemäß ist bei der Variante gemäß Fig. 2a eine spannungshochsetzende Schaltungsanordnung 4, bestehend aus zwei zusätzlichen an der Sekundärwicklung N2 geschalteten Halbleiterschaltern T3, T4 bzw. Dioden D3, D4, dem Resonanzkreis nachgeschaltet Die Halbleiterschalter T3, T4 sind antiparallel in Reihe geschaltet. Diese Reihenschaltung ist parallel zur Sekundärwicklung des HF-Trafos angeordnet. Diode D3 ist eine antiparallele Diode zum Schalter T3 und D4 eine antiparallele Diode zum Schalter T4.

Ist die hochsetzende Anordnung 4 aktiv, werden die Halbleiterschalter T3 und T4 abwechselnd mit gleicher Frequenz wie die Halbleiterschalter T2 und T1 angesteuert. Die Halbleiterschalter T1, T3 sowie die Halbleiterschalter T2, T4 werden gleichzeitig eingeschaltet. Die Halbleiterschalter T1 und T3 sind während der positiven Halbwelle des hochfrequenten Stroms durch die Induktivität L1 eingeschaltet. Die Halbleiterschalter T2 und T4 sind während der negativen Halbwelle des hochfrequenten Stroms durch die Induktivität L1 eingeschaltet. Die Einschaltdauer der Halbleiterschalter T3 bzw. T4 beträgt dabei nur einen Bruchteil der Einschaltdauer von T1 bzw. T2, insbesondere 1% -40%, beispielsweise 30%.

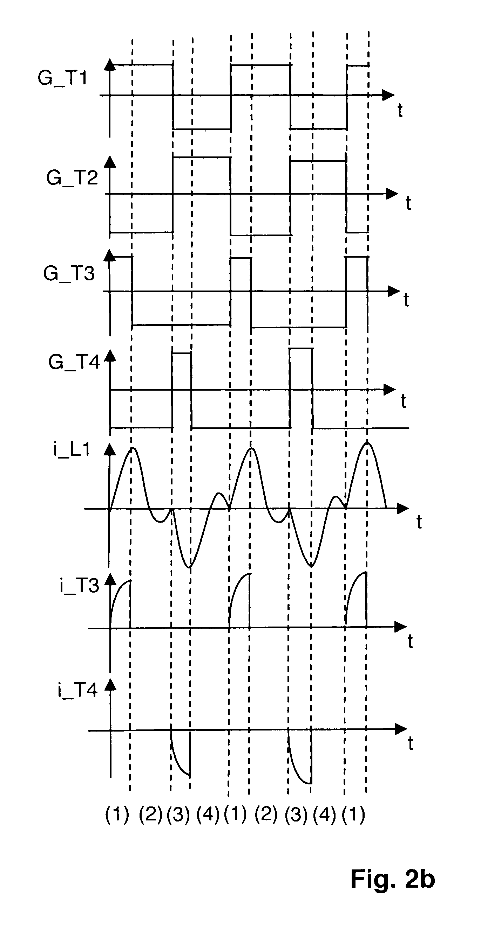

Fig. 2b zeigt die Ansteuersignale an den Gates der aktiven Halbleiterschalter T1, T2, T3 und T4 sowie den Strom durch die Induktivität L1 und den Strom durch die Halbleiterschalter T3 und T4 bei hochsetzendem Betrieb.

Es sind vier Schaltzustände zu unterscheiden:
(1) T1 ein, T2 aus, T3 ein, T4 aus
(2) T1 ein, T2 aus, T3 aus, T4 aus
(3) T1 aus, T2 ein, T3 ein, T4 aus
(4) T1 aus, T2 ein, T3 aus, T4 aus

Im Schaltzustand (1) fließt primärseitig ein positiver Strom durch den Halbleiterschalter T1. Da der Halbleiterschalter T3 geschlossen ist, fließt auf der Sekundärseite der Strom durch den Halbleiterschalter T3 und die Diode D4. Durch die eingebaute Resonanz gestaltet sich der Strom durch die Induktivität L1 und auch durch den Halbleiterschalter T3 sinusförmig, bis der Halbleiterschalter T3 ausgeschaltet wird. Es findet keine Energieübertragung auf den Kondensator C4 statt.

Im Schaltzustand (2) ist der Halbleiterschalter T3 wieder geöffnet. Der primärseitige Strom durch die Induktivität L1 fließt sinusförmig weiter. Auf der Sekundärseite fließt der Strom durch die Gleichrichterdioden D5 und D8. Der Kondensator C4 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

Im Schaltzustand (3) ist der Halbleiterschalter T2 geschlossen und der Halbleiterschalter T1 geöffnet. Primärseitig fließt der Strom durch den Halbleiterschalter T2. Sekundärseitig ist der Halbleiterschalter T4 geschlossen, so dass auf der Sekundärseite ein Strom durch den Halbleiterschalter T4 und die Diode D3 fließt. Der Strom durch die Induktivität L1 bzw. dem Halbleiterschalter T3 ist infolge der Resonanzbauelemente L1, C3 wieder sinusförmig. Das Vorzeichen des Stromes ist entgegengesetzt zum Zustand (1) bzw. (2). Der Kondensator C4 wird in diesem Zustand nicht weiter aufgeladen.

Im Schaltzustand (4) wird der Halbleiterschalter T4 wieder geöffnet. Der sekundärseitige Strom fließt nun durch den Gleichrichter, und zwar durch die Dioden D6 und D7. Der Kondensator C3 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

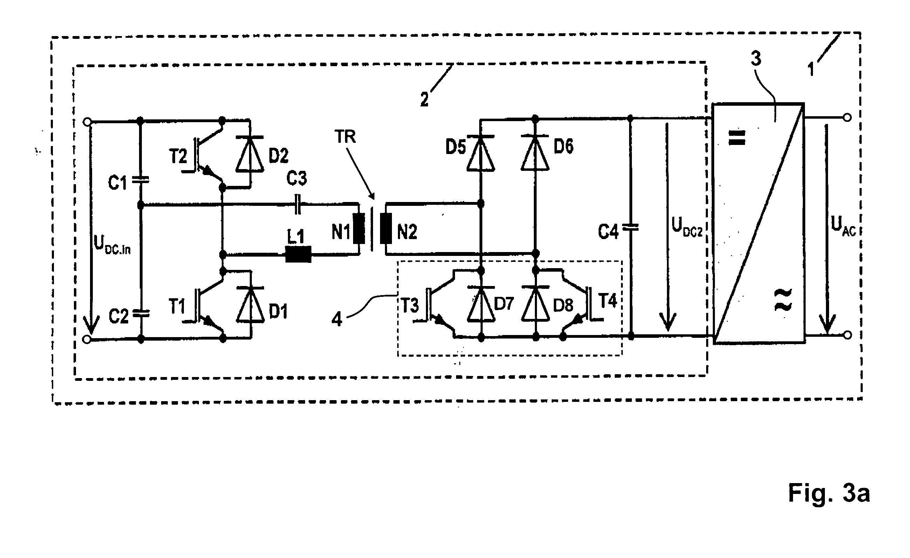

Fig. 3a veranschaulicht eine Variante, bei der die erfindungsgemäße Anordnung aus zwei zusätzlichen Schaltelementen besteht, die parallel zu jeweils einer Diode eines Brückenzweiges der sekundärseitigen Gleichrichterbrücke sind.

Der Gleichrichter besteht aus den Dioden D5-D8. Wie Fig.3a zeigt, ist den Dioden D7 und D8 jeweils ein Halbleiterschalter T3 und T4 parallel zugeschaltet. Die Dioden D7, D8 und die Halbleiterschalter T3, T4 stellen die hochsetzende Anordnung 4, wie auch in den anderen Beispielen, dar. Die hochsetzende Anordnung 4 nutzt somit Bauteile des Gleichrichters. Prinzipiell können T3 und T4 auch parallel zu den oberen Dioden des Gleichrichters D5 und D6 geschaltet werden.

Im hochsetzenden Betrieb werden die Halbleiterschalter T3 und T4 abwechselnd mit gleicher Frequenz wie die Halbleiterschalter T2 und T1 angesteuert. Die Halbleiterschalter T1 und T3 sowie die Halbleiterschalter T2 und T4 werden gleichzeitig eingeschaltet. Die Halbleiterschalter T1 und T3 sind während der positiven Halbwelle des hochfrequenten Stroms durch die Induktivität L1 eingeschaltet. Die Halbleiterschalter T2 und T4 sind während der negativen Halbwelle des hochfrequenten Stroms durch die Induktivität L1 eingeschaltet. Die Einschaltdauer von T3 bzw. T4 entspricht den vorhergehenden Beispielen.

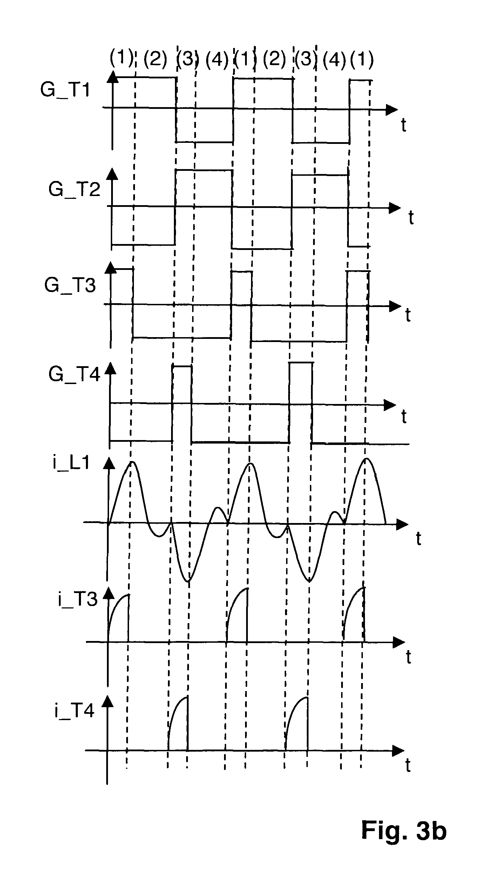

Fig. 3b zeigt die Ansteuersignale an den Gates der Halbleiterschalter T1, T2, T3 und T4 sowie den Strom durch die Induktivität L1 sowie den Strom durch die Halbleiterschalter T3 und T4 bei hochsetzendem Betrieb.

Es sind 4 Schaltzustände zu unterscheiden:
(1) T1 ein, T2 aus, T3 ein, T4 aus
(2) T1 ein, T2 aus, T3 aus, T4 aus
(3) T1 aus, T2 ein, T3 aus, T4 ein
(4) T1 aus, T2 ein, T3 aus, T4 aus

Im Schaltzustand (1) fließt primärseitig ein positiver Strom durch den Halbleiterschalter T1. Da der Halbleiterschalter T3 geschlossen ist, fließt auf der Sekundärseite der Strom durch den Halbleiterschalter T3 und die Diode D8. Durch die eingebaute Resonanz gestaltet sich der Strom durch die Induktivität L1 und auch durch den Halbleiterschalter T3 sinusförmig bis der Halbleiterschalter T3 ausgeschaltet wird. Es findet keine Energieübertragung auf den Kondensator C4 statt.

Im Schaltzustand (2) ist der Halbleiterschalter T3 geöffnet. Der primärseitige Strom durch die Induktivität L1 fließt sinusförmig weiter. Auf der Sekundärseite fließt der Strom durch die Gleichrichterdioden D5 und D8. Der Kondensator C3 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

Im Schaltzustand (3) ist der Halbleiterschalter T2 geschlossen und der Halbleiterschalter T1 geöffnet. Primärseitig fließt der Strom durch den Halbleiterschalter T2. Sekundärseitig ist der Halbleiterschalter T4 geschlossen, so dass auf der Sekundärseite ein Strom durch den Halbleiterschalter T4 und die Diode D7 fließt. Der Strom durch die Induktivität L1 bzw. dem Halbleiterschalter T3 ist infolge der Resonanzbauelemente L1, C3 wieder sinusförmig. Das Vorzeichen des Stromes ist entgegengesetzt zum Zustand (1) bzw. (2). Der Kondensator C4 wird in diesem Zustand nicht weiter aufgeladen.

Im Schaltzustand (4) wird der Halbleiterschalter T4 wieder geöffnet. Der sekundärseitige Strom fließt nun durch den Gleichrichter, und zwar durch die Dioden D6 und D7. Der Kondensator C3 wird geladen. Die im Schaltzustand (1) in der Induktivität und dem Kondensator C3 gespeicherte Energie wird an den Kondensator C4 abgegeben, so dass die Ausgangsspannung deutlich erhöht ist.

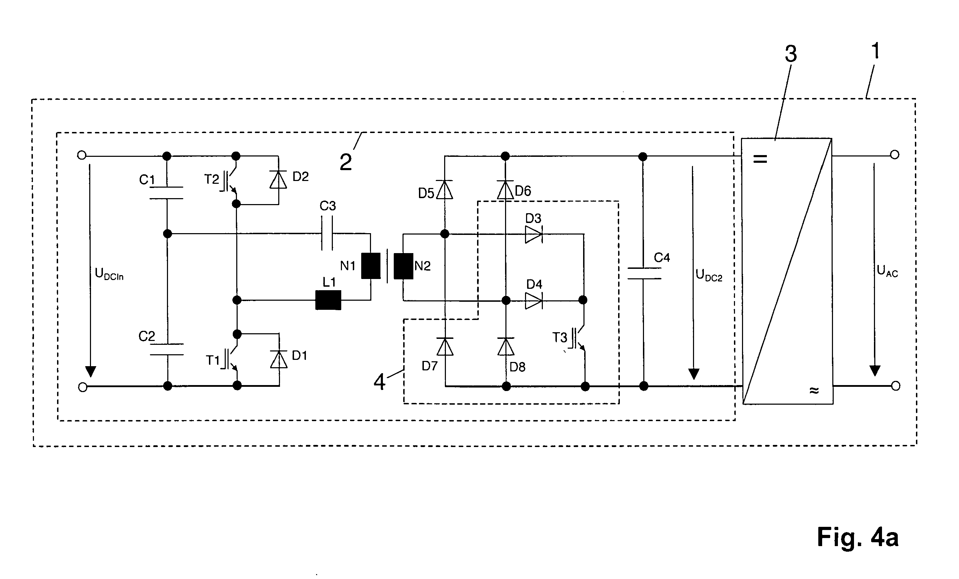

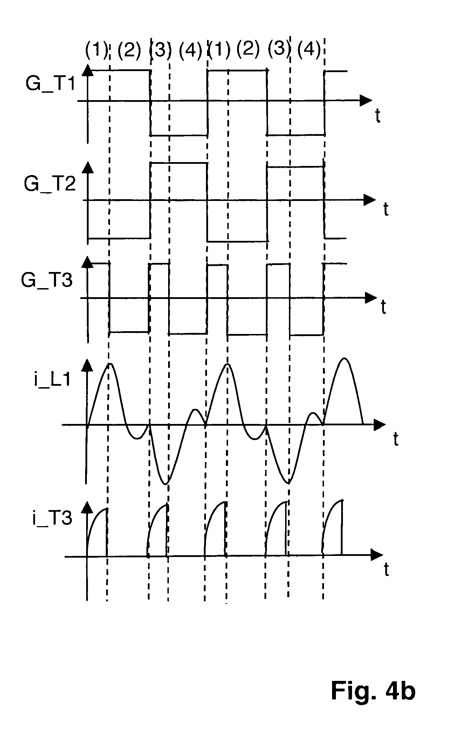

Fig. 4a veranschaulicht eine bevorzugte Variante, bei der die erfindungsgemäße Anordnung 4 aus einem zusätzlichen Schaltelement T3 besteht. Dieses Schaltelement T3 ist beispielsweise ein IGBT. Dann ist der Collector-Anschluss mit den Kathoden zweier Dioden D3 und D4 und der Emitter-Anschluss mit den Anoden der unteren Dioden D7, D8 der Gleichrichterbrücke, bestehend aus den Dioden D5 - D8, verbunden. Die Anode von D3 ist mit dem einem Wicklungsende der Sekundärwicklung N2 verbunden, die Anode von D4 mit dem anderen Wicklungsende der Sekundärwicklung N2. Damit besteht pro Diode auch eine Verknüpfung zu den AC-Anschlüssen der Gleichrichterbrücke. Damit ist die Reihenschaltung aus Diode D4 und dem Schalter T3 parallel zur Diode D8 angeordnet und die Reihenschaltung aus Diode D3 und dem Schalter T3 parallel zur Diode D7. Prinzipiell können diese Reihenschaltungen auch parallel zu den oberen Dioden D5 bzw. D6 der Gleichrichterbrücke geschaltet sein.

Die Dioden D3, D4 und der Halbleiterschalter T3 stellen die hochsetzende Anordnung 4, wie auch in den anderen Beispielen, dar. Die hochsetzende Anordnung 4 nutzt zudem Bauteile des Gleichrichters.

Im hochsetzenden Betrieb wird die Halbleiterschalter T3 mit doppelter Frequenz wie die Halbleiterschalter T2 und T1 angesteuert. Die Halbleiterschalter T1 und T3 sowie die Halbleiterschalter T2 und T3 werden gleichzeitig eingeschaltet. Die Halbleiterschalter T1 und T3 sind während der positiven Halbwelle des hochfrequenten Stroms durch die Induktivität L1 eingeschaltet. Die Halbleiterschalter T2 und T3 sind während der negativen Halbwelle des hochfrequenten Stroms durch die Induktivität L1 eingeschaltet. Die Einschaltdauer von T3 entspricht den vorhergehenden Beispielen.

Fig. 3b zeigt die Ansteuersignale an den Gates der Halbleiterschalter T1, T2, T3 und T4 sowie den Strom durch die Induktivität L1 sowie den Strom durch den Halbleiterschalter T3 bei hochsetzendem Betrieb.

Es sind 4 Schaltzustände zu unterscheiden:
(1) T1 ein, T2 aus, T3 ein
(2) T1 ein, T2 aus, T3 aus
(3) T1 aus, T2 ein, T3 ein
(4) T1 aus, T2 ein, T3 aus

Im Schaltzustand (1) fließt primärseitig ein positiver Strom durch den Halbleiterschalter T1. Da der Halbleiterschalter T3 geschlossen ist, fließt auf der Sekundärseite der Strom durch die Diode D3, den Halbleiterschalter T3 und die Diode D8. Durch die eingebaute Resonanz gestaltet sich der Strom durch die Induktivität L1 und auch durch den Halbleiterschalter T3 sinusförmig bis der Halbleiterschalter T3 ausgeschaltet wird. Es findet keine Energieübertragung auf den Kondensator C4 statt.

Im Schaltzustand (2) ist der Halbleiterschalter T3 geöffnet. Der primärseitige Strom durch die Induktivität L1 fließt sinusförmig weiter. Auf der Sekundärseite fließt der Strom durch die Gleichrichterdioden D5 und D8. Der Kondensator C3 wird geladen. Die im Schaltzustand (1) in der Induktivität L1 und dem Kondensator C3 gespeicherte Energie wird an den Kondensator C4 abgegeben, so dass die Ausgangsspannung deutlich erhöht ist.

Im Schaltzustand (3) ist der Halbleiterschalter T2 geschlossen und der Halbleiterschalter T1 geöffnet. Primärseitig fließt der Strom durch den Halbleiterschalter T2. Sekundärseitig ist der Halbleiterschalter T3 geschlossen, so dass auf der Sekundärseite ein Strom durch die Diode D4, den Halbleiterschalter T3 und die Diode D7 fließt. Der Strom durch die Induktivität L1 bzw. dem Halbleiterschalter T3 ist infolge der Resonanzbauelemente L1, C3 wieder sinusförmig. Das Vorzeichen des Stromes ist entgegengesetzt zum Zustand (1) bzw. (2). Der Kondensator C4 wird in diesem Zustand nicht weiter aufgeladen.

Im Schaltzustand (4) wird der Halbleiterschalter T3 wieder geöffnet. Der sekundärseitige Strom fließt nun durch den Gleichrichter, und zwar durch die Dioden D6 und D7. Der Kondensator C3 wird geladen. Die im Schaltzustand (1) in der Induktivität und dem Kondensator C3 gespeicherte Energie wird an den Kondensator C4 abgegeben, so dass die Ausgangsspannung deutlich erhöht ist.

Im Vergleich zum Stand der Technik integriert die Erfindung in vorteilhafter Weise eine Energiewandlerstufe, den Hochsetzsteller, in den Resonanzwandler. Dadurch entfällt die Hochsetzsteller-Diode, die im Stand der Technik vorhanden ist. Diese Diode verursacht auch dann leitend Verluste, wenn der Hochsetzsteller nicht arbeitet. Durch die Erfindung entfallen diese Verluste und der Wirkungsgrad wird verbessert.

Die Drossel des vorgeschalteten Hochsetzstellers aus dem Stand der Technik entfällt. Für die erfindungsgemäße hochsetzende Anordnung wird die Resonanzinduktivät ausgenutzt. Die Resonanzinduktivität kann als zusätzliche Drossel L1 ausgeführt sein und/oder auch die Streuinduktivität des HF-Trafos sein. Eine zusätzliche Hochsetzsteller-Drossel wie im Stand der Technik ist in der erfinderischen Anordnung somit nicht nötig, wodurch ein Bauteil und somit Kosten gespart werden.

Unter HF-Trafo ist jeder Trafo zu verstehen, der eine höhere Frequenz als die Netzfrequenz hat.

Für die Schalter T1 - T4 sind alle gängigen Schalter, vorzugsweise Halbleiterschalter, z.B. MOSFETs oder IGBTs, einsetzbar.

## Patentansprüche

1. Resonant betriebener DC/DC-Wandler (2) zum Umwandeln einer Eingangs-Gleichspannung (UDCin) in eine Ausgangs-Gleichspannung (UDC2) mit einer eingangsseitigen, Schaltelemente (T1, T2) umfassenden Brückenschaltung mit mindestens zwei AC-Ausgängen, mit einem eine Resonanzinduktivität (L1) und eine Resonanzkapazität (C3) umfassenden Resonanzkreis sowie einen Hochfrequenztransformator (TR) zur galvanischen Trennung, wobei der Transformator (TR) mindestens eine Primärwicklung (N1) und mindestens eine Sekundärwicklung (N2) jeweils mit mindestens zwei Wicklungsanschlüssen umfasst sowie die AC-Ausgänge der Brückenschaltung an die Primärwicklung (N1) und eine Gleichrichterbrücke mit Dioden (D5-D8) an der Sekundärwicklung (N2) angeschlossen sind,
**dadurch gekennzeichnet,**
**dass** eine spannungshochsetzende Schaltungsanordnung (4) derart dem Resonanzkreis nachgeschaltet ist, dass mindestens ein zusätzlich steuerbares Schaltelement (T3, T4) enthält, dass mit mindestens einer zusätzlichen Dioden (D3, D4, D9, D10) und/oder mit mindestens einer Diode (D5-D8) der sekundärseitigen Gleichrichterbrücke parallel oder in Reihe verschaltet ist, wobei diese Anordnung parallel zum Hochfrequenztransformator (TR) angeschlossen ist, so dass das zusätzliche Schaltelement (T3, T4) den Resonanzkreis in einem angesteuerten Zustand kurzschließt, so dass in der Resonanzinduktivität (L1) Energie gespeichert wird, die im nicht angesteuerten Zustand wieder abgegeben wird.

2. DC/DC-Wandler nach Anspruch 1,
**dadurch gekennzeichnet,**
**dass** die spannungshochsetzende Schaltungsanordnung (4) an der Seite der Sekundärwicklung (N2) geschaltet ist.

3. DC/DC-Wandler nach Anspruch 2,
**dadurch gekennzeichnet,**
**dass** nur ein zusätzliches Schaltelement (T3) vorhanden ist.

4. DC/DC-Wandler nach Anspruch 3,
**dadurch gekennzeichnet,**
**dass** an der Sekundärwicklung (N2) der AC-Eingang einer zusätzlichen Gleichrichterbrücke angeschlossen ist, an deren DC-Ausgang das zusätzliche Schaltelement (T3) so angeschlossen ist, dass es die zusätzliche Gleichrichterbrücke in einem angesteuerten Zustand kurzschließt.

5. DC/DC-Wandler nach Anspruch 3,
**dadurch gekennzeichnet,**
**dass** an jedem Wicklungsende der Sekundärwicklung (N2) zwei zusätzliche Dioden (D3, D4) mit der Anode angeschlossen, deren Kathoden mit dem zusätzlichen Schaltelement (T3) verbunden sind, wobei die Reihenschaltung aus D3,T3 parallel zu einer Diode (D5,D7) des einen Zweiges der sekundärseitigen Gleichrichterbrücke geschaltet ist und die Reihenschaltung aus D4,T3 parallel zu einer Diode (D6,D8) des anderen Zweiges der sekundärseitigen Gleichrichterbrücke geschaltet ist.

6. DC/DC-Wandler nach Anspruch 2,
**dadurch gekennzeichnet,**
**dass** mindestens zwei zusätzliche Schaltelemente (T3, T4) vorhanden sind.

7. DC/DC-Wandler nach Anspruch 6,
**dadurch gekennzeichnet,**
**dass** an der Sekundärwicklung (N2) zwei zusätzliche, entgegengesetzt geschaltete Dioden (D3, D4) angeschlossen sind, wobei jeder zusätzlichen Diode (D3, D4) eines der beiden zusätzlichen Schaltelemente (T3, T4) antiparallel geschaltet ist.

8. DC/DC-Wandler nach Anspruch 6,
**dadurch gekennzeichnet,**
**dass** die beiden zusätzlichen Schaltelementen (T3, T4) parallel zu mindestens einer Diode (D5,D6 oder D7,D8) eines Brückenzweiges des sekundärseitigen Gleichrichters geschaltet sind.

9. DC/DC-Wandler nach einem der vorhergehenden Ansprüche,
**dadurch gekennzeichnet,**
**dass** die eingangsseitige Brückenschaltung als Halbbrücke ausgeführt ist.

10. DC/DC-Wandler nach einem der vorhergehenden Ansprüche,
**dadurch gekennzeichnet,**
**dass** die spannungshochsetzende Schaltungsanordnung nur dann aktiviert wird, wenn die Eingangsspannung des DC/DC-Wandiers einen festgelegten Wert unterschreitet.

11. Verwendung eines DC/DC-Wandlers nach einem der vorhergehenden Ansprüche in einem Wechselrichter (1) zur Umwandlung einer Gleichspannung in eine netzkonforme Wechselspannung.

12. Verwendung eines DC/DC-Wandlers nach einem der vorhergehenden Ansprüche in einem Photovoltaikwechselrichter (1) zur Umwandlung einer Photovoltaikspannung in die netzkonforme Wechselspannung.
